# EUROPÄISCHE PATENTANMELDUNG

(11) **EP 1 970 387 A1**
(43) Veröffentlichungstag der Anmeldung: **17.09.2008**
(21) Anmeldenummer: 08003988.6
(22) Anmeldetag: 04.03.2008
(51) Int. Cl.: C08C 19/36, C08F 8/46, C08L 51/04

(54) **Verfahren zur Modifizierung von Gummi- und Thermoplastabfällen mittels Propfung während eines Mahlprozesses**

(30) Priorität: 12.03.2007 DE 102007011825
(71) Anmelder: Deutsche Gumtec AG, 06108 Halle/S. (DE)
(72) Erfinder: Thiele, Klaus, Dr., 31139 Hildesheim (DE); Rom, Christel, 06116 Halle/Saale (DE); Winkler, Ute, 06114 Halle/Saale (DE)
(74) Vertreter: Voigt, Wolf-Rüdiger

(57) **Zusammenfassung**

Die Erfindung betrifft ein Verfahren zur Herstellung polarmodifizierter Gummi- und olefinischer Thermoplastabfälle mittels Pfropfung während eines Mahlprozesses zur Aufbereitung sowie die Verwendung der so modifizierten Gummi-und Thermoplastabfälle.

Die Aufgabe der vorliegenden Erfindung bestand in der Entwicklung eines Verfahrens zur Herstellung polarmodifizierter Gummi- und olefinischer Thermoplastabfälle, die als Verträglichkeitsvermittler in unterschiedlichen Kunststoffblends und -composites, ohne die Nachteile bekannter funktionalisierter Kunststoff-Recyclate, insbesondere die für ihre Verwendung unzureichenden mechanischen Kennwerte, eingesetzt werden können.

Erfindungsgemäß wird die Aufgabe gelöst, indem in einem Verfahrensschritt die Abfälle in einem Temperaturbereich zwischen 40°C und 140°C gleichzeitig gemahlen und pfropfmodifiziert werden.
Das Verfahren besteht aus folgenden Stufen:
A) Zerkleinern (Shreddern) der aus vulkanisiertem Elastomer (Gummi) oder olefinischem Thermoplast bestehenden Ausschussteile in einer Zerkleinerungsanlage (Shredder) auf einen Teilchengrößendurchmesser von ca 4 und 8 mm, wobei die Abfälle möglicht sortenrein vorliegen sollten,
B) Mischung des geshredderten Elastomer- oder Thermoplastmaterials mit mindestens einem organischen Peroxid und einer α,β-ethylenisch mindestens eine ungesättigte polare Gruppe besitzenden Verbindung (polares Monomer) in einer Mischanlage,
C) gleichzeitige Vermahlung und Pfropfung der in Stufe B) hergestellten Mischung in einer Mahlanlage bekannter Art bei einer Verweilzeit zwischen 30 sec und 10 min innerhalb eines Temperaturbereiches zwischen 40 und 140 °C bis auf einen Teilchengrößendurchmesser < 1 mm und
D) Entfernung von Restmonomerbestandteilen sowie flüchtigen Reaktionsnebenprodukten aus dem vermahlenen Reaktionsprodukt mittels Stickstoffspülung.

## Beschreibung

Die Erfindung betrifft ein Verfahren zur Herstellung polarmodifizierter Gummi- und olefinischer Thermoplastabfälle mittels Pfropfung während eines Mahlprozesses zur Aufbereitung sowie die Verwendung der so modifizierten Gummi-und Thermoplastabfälle.

Die EP 1362681 A1 offenbart einen Mahlprozess, wonach Ausschussteile aus vulkanisierten Elastomeren zu feinteiligen Gummimehlen verarbeitet werden.

Die in der EP beschriebene Mahlanlage besteht im Wesentlichen aus einem Rotor und einem Stator, die sich gegeneinander bewegen. Rotor und Stator sind profiliert und mit einem Spalt von ca. 1 bis 2 mm versehen. Die geshredderten Gummiausschussteile werden in der Mahlanlage bis zu diesem Spalt zwangsgefördert und dann auf der Profilierung zerrieben unter Erhalt von Gummimehlen mit Partikelgrößen < 1 mm, die als neuer Werkstoff wieder verwendbar sind. Bei diesem Prozess treten Temperaturen bis zu 140 °C auf.

Weiterhin ist bekannt, Elastomere mit unterschiedlichem Vernetzungsgrad, einschließlich (ausvulkanisiertem) Gummi, sowie thermoplastische Kunststoffe mittels Pfropfung polarer Monomerer, insbesondere carboxyl- bzw. anhydrid-, amin- und hydroxylgruppenhaltiger Monomerer, zu modifizieren (US 3862265, US 4443584, US 4652326, EP 0268486).

Die Pfropfmodifizierung besonders von thermoplastischen olefinischen Kunststoffen nach unterschiedlichen Verfahren wird häufig angewandt. Neben der Pfropfpolymerisation in homogenen organischen Lösungen (DE 2023154, DE 3910062, EP 0485983) oder in wässrigen Suspensionen (EP 0001313, DE 2326589), die auf Grund des Einsatzes und der Wiedergewinnung größerer Mengen an Lösungs- bzw. Suspendiermittel wirtschaftlich nicht vertretbar sind, werden zumeist Schmelzepfropftechnologien kommerziell genutzt (DE 2242324, DE 2326589, US 3177269, US 3177270).

Gemäß GB 934,038 wird gelehrt, dass eine Modifizierung vom Gummiabfällen durch Pfropfung und gleichzeitige Mahlung erfolgen kann. Es kann davon ausgegangen werden, dass die Pfropfung zu Beschleunigungs-und Aktivierungszwecken bei erhöhter Temperatur ausgeführt wird. Ergänzend sei noch angemerkt, dass in der GB 697,562 ein analoges Modifizierungsverfahren, wie bei der GB 934,038genannt wird, wobei hier eine Aussage zur Temperatur erfolgt. Das Verfahren wird bei Temperaturen bis zu 100 °C durchgeführt, allerdings wird nicht mit Gummi-und Thermoplastabfällen gearbeitet.

Darüber hinaus ist auch die Pfropfung polarer Monomerer auf thermoplastische Materialien, wie z. B. Polypropylen und andere Olefinhomo- und -copolymere, in fester, zumeist pulveriger, körniger oder granularer Phase bekannt (DD 275 159 A3, DE 4342605 A1, EP 0519341 B1). Für die Funktionalisierung spezieller Elastomere ist auch die Pfropfung in fester Elastomerphase bekannt (DD 136971, EP 0642538 B1).

Während der hauptsächliche Nachteil von Pfropfpolymerisationsverfahren in der Thermoplast- bzw. Elastomerschmelze im Polymerabbau und der dadurch bedingten starken Absenkung des mechanischen Polymerkennwertniveaus besteht, sind die bekannten Festphasenpfropftechnologien für Gummi-Recyclate und Thermoplastabfallprodukte auf Grund der Erreichung nur geringer Pfropfgrade nicht bekannt.

Die Aufgabe der vorliegenden Erfindung bestand in der Entwicklung eines Verfahrens zur Herstellung polarmodifizierter Gummi- und olefinischer Thermoplastabfälle, die als Verträglichkeitsvermittler in unterschiedlichen Kunststoffblends und -composites, ohne die beschriebenen Nachteile bekannter funktionalisierter Kunststoff-Recyclate, insbesondere die für ihre Verwendung unzureichenden mechanischen Kennwerte, eingesetzt werden können.

Erfindungsgemäß wird die Aufgabe durch ein Verfahren gemäss Patentanspruch 1 gelöst. Die weitere Ausgestaltung der Erfindung ergibt sich aus den Patentansprüchen 2-6.
Das Verfahren wird in Anspruch 1 detaillierter ausgeführt und besteht aus folgenden Stufen:
A) Zerkleinern (Shreddern) der aus vulkanisiertem Elastomer (Gummi) oder olefinischem Thermoplast bestehenden Ausschussteile in einer Zerkleinerungsanlage (Shredder) auf einen Teilchengrößendurchmesser von ca. 4 und 8 mm, wobei die Abfälle möglicht sortenrein vorliegen sollten,
B) Mischung des geshredderten Elastomer- oder Thermoplastmaterials mit mindestens einem organischen Peroxid und einer α,β-ethylenisch mindestens eine ungesättigte polare Gruppe besitzenden Verbindung (polares Monomer) in einer Mischanlage,
C) gleichzeitige Vermahlung und Pfropfung der in Stufe B) hergestellten Mischung in einer Mahlanlage bekannter Art bei einer Verweilzeit zwischen 30 sec und 10 min innerhalb eines Temperaturbereiches zwischen 40 und 140 °C bis auf einen Teilchengrößendurchmesser < 1 mm und
D) Entfernung von Restmonomerbestandteilen sowie flüchtigen Reaktionsnebenprodukten aus dem vermahlenen Reaktionsprodukt mittels Stickstoffspülung.

Bei diesem, z. B. in einer Mahlanlage wie in der EP 1362681 A1 beschrieben Mahlvorgang, zerfällt bei den unter Stufe C) angegebenen Temperaturen, die mittels eines Kühlaggregats gezielt bzw. variabel einstellbar sind, das Peroxid in Radikale und initiiert die Pfropfung des polaren Monomers auf der Oberfläche des Elastomers bzw. thermoplastischen Olefinpolymers.

Die mittels erfindungsgemäßer Lösung mit hoher Pfropfausbeute erhaltenen Produkte weisen einen hohen Pfropfgrad auf und sind als Verträglichkeits- bzw. Haftvermittler sowie Koppler in unterschiedlichen Polymer- und Elastomerblends sowie thermoplastischen Polymercomposites verwendbar.

Darüber hinaus sind besonders die oberflächenmodifizierten Gummimehle bevorzugt auch als Absorbentien geeignet.

Die Pfropfung erfolgt direkt in der Mahlanlage, wobei die Pfropfparameter, insbesondere Pfropfausbeute und Pfropfgrad sowie auch Pfropfastlänge und -dichte, über die spezifische Art und Konzentration des Monomers bzw. Monomergemisches sowie des verwendeten Peroxids bzw. Peroxidgemisches und der Temperatur eingestellt werden können.
Während beispielsweise bei der Gummivermahlung und -pfropfung mittels niedriger Temperaturen längere Pfropfäste auf den Gummimehlen erhalten werden, entstehen bei hohen Temperaturen und konstanter Monomerkonzentration kleinere Pfropfäste in höherer Zahl.

Die im Anspruch 2 angeführten vernetzten Elastomere sowie die im Anspruch 3 genannten olefinischen Thermoplaste sind für das erfindungsgemäße Verfahren, bestehend aus dem Shreddern in die für die Vermahlung geeignete Teilchengröße, der sich anschließenden Mischung mit dem (den) Monomer(en) und dem peroxidischem Initiator sowie dem kombinierten Mahl- und Pfropfprozess, bevorzugt einsetzbar.

Die gemäß Anspruch 4 beanspruchten polaren Monomere sind bevorzugt verwendbar.
Unter Berücksichtigung der konkreten Halbwertszeiten werden vorzugsweise die im Anspruch 5 genannten organischen Peroxide als radikalbildende Initiatoren eingesetzt.

Das erfindungsgemäße Verfahren wird anhand der nachfolgenden Beispiele näher erläutert. Es wird auf die Tabellen 1 und 2 verwiesen:
Tabelle 1: Vermahlung und Pfropfung von Gummi-Recyclat
Tabelle 2: Vermahlung und Pfropfung von Thermoplast-Recyclat

### Beispiel 1

100 Masseteile eines auf einen durchschnittlichen Teilchendurchmesser von ca.4 bis 8 mm geshreddertes EPDM werden in einem Mischer mit 5 Masseteilen Maleinsäureanhydrid und 2 Masseteilen Dibenzoylperoxid bei Raumtemperatur unter Stickstoffatmosphäre gemischt. Anschließend wird diese Mischung in eine wie in der EP 136268 A1 beschriebenen Mahlanlage dosiert und über eine Verweilzeit von insgesamt 2,5 min vermahlen und gleichzeitig gepfropft. Während zu Beginn des Mahlprozesses die Innentemperatur der Mahlanlage 25 °C betrug, stieg sie während des Mahlvorgangs auf 120 °C.
Mittels Stickstoffspülung wurde das pfropfmaleinierte EPDM von flüchtigem Restmonomer und Restinitiator befreit.
Die ermittelten Kennwerte sind in Tabelle 1 angegeben.

### Beispiele 2 bis 30

Durch Variation der Stufe C), insbesondere der Vermahlungstemperatur, der Verweilzeit der Mischung in der Mahlanlage sind die Pfropfparameter variierbar, wobei der Pfropfgrad wesentlich ist (s. Tabellen 1 und 2). Für die in den Tabellen aufgeführten Beispiele ist die Mahl- und Pfropftemperatur im Bereich von 60 bis 120 °C gewählt worden, während die Verweilzeit mit 2,5 min konstant gehalten wurde.

Während die anderen drei Verfahrensstufen - Shreddern A), Mischen B) und Stickstoffspülung D) - entsprechend oben genannten Angaben ausgeführt werden, ist die Vermahlung/ Pfropfung C) von Elastomeren (Tabelle 1: Beispiele 1 bis 14) sowie olefinischen Thermoplasten (Tabelle 2: Beispiele 15 bis 30) unter den angeführten Angaben in beiden Tabellen variiert worden.
Als Einsatzkomponenten wurden eingesetzt:
Elastomere: außer o. a. EPDM vernetzter Naturkautschuk (NR) und Butylkautschuk (IIR) Olefinische Thermoplaste: Homo-Polypropylen (PP), Polyethylen (HDPE) und ein verzweigtes Polyethylen (LDPE)
Monomere: Maleinsäureanhydrid (MSA) und Acrylsäure (AS)
Peroxide: Dibenzoylperoxid (BPO) und Dicumylperoxid (DCP)

**Tabelle 1: Vermahlung und Pfropfung von Gummi-Recyclat**

| Beispiel- Nr. | Elastomer- basis 100 MT | Teilchen-größe [mm] | Polares Monomer [MT] | Peroxid. Initiator [MT] | Mahl- und Pfropftemp. [°C] | Pfropf-grad [Masse-%] |
|---|---|---|---|---|---|---|
| 1 | EPDM | < 0,63 | 5 MSA | 2 BPO | 120 | 1,6 |
| 2 | EPDM | < 0,20 | 5 MSA | 2 BPO | 120 | 1,7 |
| 3 | EPDM | < 0,63 | 5 AS | 2 BPO | 120 | 1,5 |
| 4 | EPDM | < 0,20 | 5 AS | 2 BPO | 120 | 1,6 |
| 5 | EPDM | < 0,63 | 5 AS | 2 DCP | 120 | 1,5 |
| 6 | EPDM | < 0,20 | 5 AS | 2 DCP | 120 | 1,6 |
| 7 | EPDM | < 0,63 | 5 MSA | 2 DCP | 120 | 1,6 |
| 8 | EPDM | < 0,63 | 5 MSA | 2 DCP | 120 | 1,7 |
| 9 | EPDM | < 0,63 | 5 AS | 2 BPO | 80 | 1,4 |
| 10 | EPDM | < 0,63 | 5 AS | 2 DCP | 80 | 1,7 |
| 11 | NR | < 0,63 | 5 AS | 2 BPO | 120 | 1,5 |
| 12 | NR | < 0,63 | 5 MSA | 2 BPO | 120 | 1,6 |
| 13 | IIR | < 0,63 | 5 AS | 2 BPO | 120 | 1,4 |
| 14 | IIR | < 0,63 | 5 MSA | 2 BPO | 120 | 1,5 |

**Tabelle 2: Vermahlung und Pfropfung von Thermoplast-Recyclat**

| Beispiel- Nr. | Thermoplast- basis 100 MT | Teilchen- größe [mm] | Polares Monomer [MT] | Peroxid. Initiator [MT] | Mahl- und Pfropftemp. [°C] | Pfropf-grad [Masse-%] |
|---|---|---|---|---|---|---|
| 15 | PP | < 1 | 5 AS | 2 DCP | 80 | 1,9 |
| 16 | PP | < 0,63 | 5 AS | 2 DCP | 80 | 2,0 |
| 17 | PP | < 1 | 5 MSA | 2 DCP | 80 | 1,9 |
| 18 | PP | < 0,63 | 5 MSA | 2 DCP | 80 | 2,0 |
| 19 | PP | < 1 | 5 AS | 2 LPO | 80 | 1,6 |
| 20 | PP | < 0,63 | 5 AS | 2LPO | 80 | 1,7 |
| 21 | PP | < 1 | 5 AS | 2 DCP | 80 | 1,7 |
| 22 | PP | < 0,63 | 5 AS | 2 DCP | 80 | 1,8 |
| 23 | HDPE | < 1 | 5 AS | 2 DCP | 80 | 1,7 |
| 24 | HDPE | < 0,63 | 5 AS | 2 DCP | 80 | 1,8 |
| 25 | HDPE | < 1 | 5 MSA | 2 DCP | 80 | 1,7 |
| 26 | HDPE | < 0,63 | 5 MSA | 2 DCP | 80 | 1,9 |
| 27 | LDPE | < 1 | 5 AS | 2 DCP | 80 | 1,5 |
| 28 | LDPE | < 0,63 | 5 AS | 2 DCP | 80 | 1,6 |
| 29 | LDPE | < 1 | 5 MSA | 2 DCP | 80 | 1,6 |
| 30 | LDPE | < 0,63 | 5 MSA | 2 DCP | 80 | 1,7 |

## Patentansprüche

1. Verfahren zur Herstellung von polarmodifizierten Gummi- und Thermoplastabfällen zur Aufbereitung, bestehend aus folgenden Stufen:
A) Zerkleinern (Shreddern) der aus vulkanisiertem Elastomer (Gummi) oder olefinischem Thermoplast bestehenden Ausschussteile in einer Zerkleinerungsanlage (Shredder) auf einen Teilchengrößendurchmesser von ca. 4 und 8 mm,
B) Mischung des zerkleinerten (geshredderten) Elastomer- oder Thermoplastmaterials mit einem organischen Peroxid und einer α,β-ethylenisch mindestens eine ungesättigte polare Gruppe besitzenden Verbindung (polares Monomer) in einer Mischanlage,
C) gleichzeitige Vermahlung und Pfropfung der in Stufe B) hergestellten Mischung in einer Mahlanlage bekannter Art bei Verweilzeiten zwischen 30 sec und 10 min innerhalb eines Temperaturbereiches zwischen 40 und 140 °C bis auf einen Teilchengrößendurchmesser < 1 mm und
D) Entfernung von Restmonomer- und Restinitiatorbestandteilen sowie flüchtigen Reaktionsnebenprodukten aus dem vermahlenen Reaktionsprodukt mittels Stickstoffspülung.

2. Verfahren nach Anspruch 1, **dadurch gekennzeichnet, dass**Gummi-Recyclate auf Elastomerbasis von Ethylen-Propylen- Dien-Terpolymeren (EPDM), Naturkautschuk (NR), Styrol-Butadien-Kautschuk (SBR), *Butadien-Kautschuk (BR), Acrylnitril-Butadien-Kautschuk (NBR),* Polyisopren (IR), Butylkautschuk (IIR), Chloropren-Kautschuk (CR), Epichlorhydrincopolymer-Kautschuk (ECO), Ethylen/Acrylat-Copolymer-Kautschuk (AEM), Acrylatkautschuk (ACM) und Silikonkautschuk verwendet werden.

3. Verfahren nach Anspruch 1, **dadurch gekennzeichnet, dass** Thermoplast-Recyclate auf Basis von Polypropylenen (PP), vorzugsweise Propylenhomopolymeren (HPP), statistischen und heterophasigen Propylencopolymeren (RCP, HCP) sowie von Polyethylenen (PE), vorzugsweise HDPE, LDPE und LLDPE, und Ethylencopolymeren, vorzugsweise Ethylen/Vinyacetat- (EVA), Ethylen/(Meth)Acrylat-Copolymeren (EMA) verwendet werden.

4. Verfahren nach einem oder mehreren der Ansprüchen 1 bis 3, **dadurch gekennzeichnet, dass** das zu pfropfende polare Monomere ausgewählt wird unter Acrylsäure, Maleinsäureanhydrid, Acrylamid, Vinylacetat sowie Vinylacetat/Styrol-Mischungen.

5. Verfahren nach einem oder mehreren der Ansprüchen 1 bis 4, **dadurch gekennzeichnet, dass** der peroxidische Initiator vorzugsweise ausgewählt wird unter Dibenzoyl-, Dilauroyl- und Dicumylperoxid.

6. Verwendung der nach einem oder mehreren der Ansprüche 1 bis 5 hergestellten polarmodifizierten Gummi- und olefinischen Thermoplastabfälle als Verträglichkeitsvermittler in Polymercompounds, Haftvermittler in Mehrschichtverbunden oder als Absorbentien.
